# EUROPÄISCHE PATENTANMELDUNG

(11) **EP 2 905 197 A1**
(43) Veröffentlichungstag der Anmeldung: **12.08.2015**
(21) Anmeldenummer: 15153451.8
(22) Anmeldetag: 02.02.2015
(51) Int. Cl.: B62B 5/00, B62B 3/00

(54) **Schutzhülle für einen Transportwagen**

(30) Priorität: 04.02.2014 DE 102014001331
(71) Anmelder: Ewert, Steffen, 22529 Hamburg (DE); Hagemann, Rüdiger, 25348 Glückstadt (DE)
(72) Erfinder: Ewert, Steffen, 22529 Hamburg (DE); Hagemann, Rüdiger, 25348 Glückstadt (DE)
(74) Vertreter: Müller Verweyen

(57) **Zusammenfassung**

Schutzhülle (1), die zur Umhüllung eines fahrbaren, ein Rahmengestell (24) und eine Mehrzahl von in dem Rahmengestell (24) gehaltenen Böden (23) aufweisenden Transportwagens (20), insbesondere zum Transport von Pflanzen und Blumen, eingerichtet ist, wobei die Schutzhülle (1) eine flächige Schutzplane (2) umfasst, wobei
im Bereich einer Oberkante (3) der Schutzplane (2) mindestens ein Haltemittel (4) unverlierbar angebracht ist, das mit einer Aufnahme (25) an der Oberseite (26) des Rahmengestells (24) lösbar verbindbar ist, um die Schutzhülle (1) an der Oberseite (26) des Rahmengestells (24) zu halten, und im Bereich einer ersten und einer zweiten Seitenkante (5 und 6) der Schutzplane (2) jeweils mindestens ein Verbindungsmittel (7) unverlierbar angebracht ist, wobei das Verbindungsmittel (7) im Bereich der ersten Seitenkante (5) mit dem Verbindungsmittel (2) im Bereich der zweiten Seitenkante (6) lösbar verbindbar ist.

## Beschreibung

Die Erfindung betrifft eine Schutzhülle, die zur Umhüllung eines fahrbaren, ein Rahmengestell und eine Mehrzahl von in dem Rahmengestell gehaltenen Böden aufweisenden Transportwagens, insbesondere zum Transport von Pflanzen und Blumen, eingerichtet ist, wobei die Schutzhülle eine flächige Schutzplane umfasst.

Zur Beförderung von Blumen und Pflanzen werden regelmäßig fahrbare Transportwägen verwendet, insbesondere sogenannte CC-Container. Ein derartiger CC-Container ist ein fahrbarer, zerlegbarer und dann stapelbarer Pfand-Transportkarren aus in der Regel feuerverzinktem Stahl. Diese CC-Container gibt es in verschiedenen normierten Ausführungen, wobei die einzelnen CC-Container Bestandteile eines CC-Container-Pool-Systems bilden. Bei diesem CC-Container-Pool-System handelt es sich um eines der meist genutzten und verbreiteten Mehrwegladungsträgersysteme Europas, wobei die CC-Container überwiegend im Pflanzenhandel beziehungsweise im sogenannten Erwerbsgartenbau eingesetzt werden. Innerhalb dieses Pool-Systems können die CC-Container beliebig getauscht werden, so dass Lieferanten sofort volle Container gegen leere Container austauschen können.

Es ist eine als Flower-Safe^{®} bezeichnete Schutzplane bekannt, bei der eine aufgerollte und an beiden freien Enden mit einer Befestigungsstange versehene Plane mittels einer ersten der Befestigungsstangen in eine der wagenseitigen Stangen eingeschoben beziehungsweise dort festgelegt wird. Anschließend wird die Plane abgewickelt und diese einmal um den Transportwagen herumgewickelt, bis schließlich der gesamte Transportwagen umwickelt ist. Anschließend erfolgt das Einstecken der zweiten Befestigungsstange in eine weitere wagenseitige Stange und schließlich mittels eines Klettverschlusses eine Festlegung der Plane. Der Nachteil dieses Systems kann insbesondere darin gesehen werden, dass die Handhabung dieser Abwickelplane relativ aufwendig ist, insbesondere was die Festlegung der Plane mittels der Befestigungsstangen betrifft. Ein weiterer Nachteil kann darin gesehen werden, dass die Plane nach dem Entfernen wieder aufgerollt und entsprechend verstaut werden muss.

Aufgabe der vorliegenden Erfindung ist es, eine kostengünstige und wiederverwendbare Schutzhülle für einen Transportwagen bereitzustellen, die leicht, schnell und sicher durch eine einzelne Person handhabbar ist und maximale Transportsicherheit sicherstellt.

Gemäß den Grundgedanken der Erfindung wird eine Schutzhülle vorgeschlagen, die eine flächige Schutzplane umfasst, wobei im Bereich einer Oberkante der Schutzplane mindestens ein Haltemittel unverlierbar angebracht ist, das mit einer Aufnahme an der Oberseite des Rahmengestells lösbar verbindbar ist, um die Schutzhülle an der Oberseite des Rahmengestells zu halten, und im Bereich einer ersten und einer zweiten Seitenkante der Schutzplane jeweils mindestens ein Verbindungsmittel unverlierbar angebracht ist, wobei das Verbindungsmittel im Bereich der ersten Seitenkante mit dem Verbindungsmittel im Bereich der zweiten Seitenkante lösbar verbindbar ist. Der Vorteil dieser Lösung ist in der besonders einfachen Handhabbarkeit beim Anbringen der Schutzhülle zu sehen. Durch die Haltemittel kann die Schutzhülle in einer beliebigen Aufnahme an der Oberseite des Rahmengestells befestigt werden. Damit kann die Schutzhülle durch nur eine Person zunächst in Höhe der Oberseite des Rahmengestells positioniert werden. In einem zweiten Schritt kann somit auf einfache Art und Weise die Schutzhülle vollständig um den Transportwagen gelegt und die beiden Seitenkanten über das Verbindungsmittel miteinander verbunden werden, so dass die Schutzhülle zuverlässig in Position gehalten wird und den Transportwagen gestrafft umgibt.

Es ist vorteilhaft, wenn das Haltemittel durch ein Formschlusselement gebildet wird. Formschlusselemente werden in diesem Fall aufgrund ihrer einfachen Lösbarkeit bevorzugt verwendet.

Es ist insbesondere vorteilhaft, wenn das Haltemittel durch ein Hakenelement gebildet wird. Der Haken bietet den Vorteil, dass er an der Aufnahme der Oberseite des Rahmengestells sowohl einfach anbringbar als auch einfach lösbar ist. Konstruktive Veränderungen an dem Transportwagen sind somit nicht notwendig.

In einer weiteren bevorzugten Ausführungsform wird die Schutzplane durch eine luftundurchlässige Folie gebildet. So kann das Transportgut zuverlässig vor Transportschäden geschützt werden. Die luftundurchlässige Schutzplane bietet insbesondere Schutz vor Schmutz und thermischen Einflüssen.

Weiter ist es vorteilhaft, wenn die Schutzplane durch eine Gitter-verstärkte Folie oder Gerüstbaufolie gebildet wird. Gitter-verstärkte Folien bieten den Vorteil, dass sie gegenüber unverstärkten Folien eine erhöhte Beanspruchbarkeit aufweisen. Durch das gestraffte Befestigen der Schutzhülle an dem Transportwagen ist diese besonders Zugspannungen in Längsrichtung ausgesetzt, was bei einer wiederholten Verwendung der Schutzhülle zu einem Materialversagen führen kann. Durch die Verwendung einer Gitter-verstärkten Folie kann gegenüber unverstärkten Folien eine erhöhte Lebensdauer gewährleistet werden. Gitter-verstärkte Folien und Gerüstbaufolien sind Standardprodukte von der Rolle, wodurch niedrige Materialkosten erzielt werden können.

Eine weitere bevorzugte Ausführungsform sieht vor, dass das Verbindungsmittel durch eine Klettverbindung gebildet wird. Die Klettverbindung erlaubt dabei ein einfaches und schnelles Verbinden und Lösen der Verbindungsmittel.

Weiter ist es vorteilhaft, wenn sich das Verbindungsmittel über den Großteil der Länge der ersten und/oder zweiten Seitenkante erstreckt. Es kann damit das Abstehen von losen Kanten der Schutzhülle vermieden werden, die sonst beim Transport des Transportwagens hinderlich sein könnten. Zusätzlich wird das von der Schutzhülle umgebene Raumvolumen zuverlässiger vor Umwelteinflüssen geschützt. Das ist insbesondere der Fall, wenn sich das Verbindungsmittel über die gesamte Länge der ersten und/oder zweiten Seitenkante erstreckt.

Weiter wird es bevorzugt, wenn an der Schutzhülle mindestens ein Eingriff vorgesehen ist, durch den eine vertikale Stange des Rahmengestells bei befestigter Schutzhülle greifbar ist. Dadurch wird eine einfache Handhabbarkeit beim Transport erreicht, da das Rahmengestell an ausgewählten Stellen zugänglich bleibt und so mit einer Hand umgriffen werden kann.

Ferner ist es vorteilhaft, wenn die Schutzhülle eine Innenfläche und eine Außenfläche aufweist, wobei das Verbindungsmittel im Bereich der ersten Seitenkante entweder auf der Innenfläche oder auf der Außenfläche vorgesehen ist, und das Verbindungsmittel im Bereich der zweiten Seitenkante an der jeweils anderen Außen- bzw. Innenfläche vorgesehen ist. Es wird damit gewährleistet, dass die Seitenkanten im Bereich des Verbindungsmittels plan aufeinander aufliegen. Das Abstehen der ersten und/oder zweiten Seitenkante kann so vermieden werden.

Weiter ist es vorteilhaft, wenn die Länge der flächigen Schutzhülle so gewählt ist, dass bei Verbindung des Verbindungsmittels der ersten Seitenkante mit dem Verbindungsmittel der zweiten Seitenkante eine Überschneidung der Seitenkanten gegeben ist. Durch die Überschneidung können Toleranzen bei der Fertigung oder beim Anlegen der Schutzhülle ausgeglichen werden.

Eine weitere bevorzugte Ausführungsform sieht vor, dass im Endbereich der ersten und zweiten Seitenkante mindestens eine Spannvorrichtung vorgesehen ist. Die Spannvorrichtung ermöglicht eine feste Verzurrung der Schutzplane an dem Transportwagen.

Es ist vorteilhaft, wenn die Spannvorrichtung mit dem Bereich der ersten Seitenkante und dem Bereich der zweiten Seitenkante verbunden ist. Bei dieser Ausführungsform erleichtert die Spannvorrichtung das Verbinden der Verbindungsmittel und sichert die Schutzhülle zusätzlich vor einem ungewollten Öffnen.

Ferner ist es vorteilhaft, wenn die Spannvorrichtung mindestens einen Spanngurt und mindestens einen Klickverschluss umfasst. Diese Lösung ermöglicht es, die Schutzhülle zunächst ungestrafft an dem Transportwagen anzubringen. Mit dem Schließen des Klickverschlusses werden die Spanngurte anschließend miteinander verbunden. Über zwei ebenfalls an der Klickverbindung angebrachte Schlaufen kann der Spanngurt zur Straffung befestigt werden. Die Geometrie der Schlaufen ist so gewählt, dass ein Zurückrutschen des Spanngurtes nicht ohne Weiteres möglich ist, so dass die Spannung aufrechterhalten wird. Die Verbindungsmittel der beiden Seitenkanten können durch die so erreichte Spannung der Schutzhülle einfach miteinander verbunden werden.

Weiter ist es besonders vorteilhaft, wenn die Schutzhülle im Bereich der Spannvorrichtung materialverstärkt ist. Durch das Einbringen der Spannung über die Spannvorrichtung wirken im Bereich der Spannvorrichtung lokal hohe Spannungen auf die Schutzplane. Durch die Materialverstärkung dieser Stellen, z.B. durch ein Lochband, kann dem entgegengewirkt werden und eine höhere Lebensdauer der Schutzplane erzielt werden.

Die Erfindung wird im Folgenden anhand bevorzugter Ausführungsformen unter Bezugnahme auf die beigefügten Figuren erläutert. Dabei zeigen:
- Fig. 1: einen CC-Container;
- Fig. 2: eine Ansicht der Innenseite einer Schutzhülle in einer ersten Ausführungsform;
- Fig. 3: eine Ansicht der Innenseite einer Schutzhülle in einer zweiten Ausführungsform.

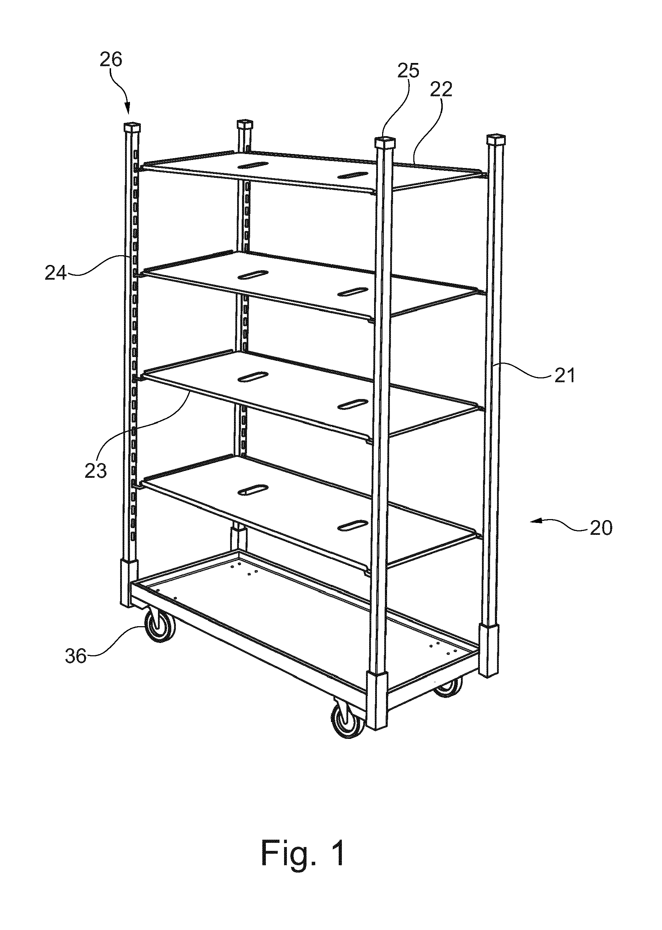

Fig. 1 zeigt einen Transportwagen 20, der dafür geeignet ist, von einer erfindungsgemäßen Schutzhülle 1 umhüllt zu werden. Bei dem Transportwagen 20 handelt es sich in den hier beschriebenen Ausführungsbeispielen um einen CC-Container. Alternativ sind jedoch auch andere Transportwagen 20 denkbar.

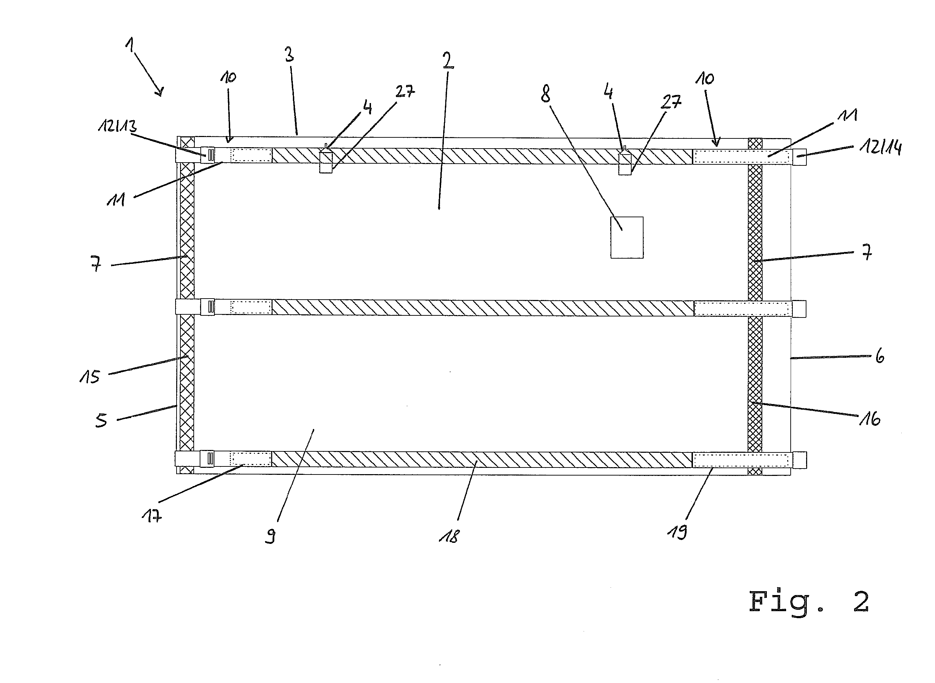

Fig. 2 zeigt eine schematische Darstellung einer Schutzhülle 1, wobei die Ansicht eine Innenfläche 9 der Schutzhülle 1 zeigt. Die Innenfläche 9 ist die Fläche, die im befestigten Zustand dem Transportwagen 20 zugewandt ist. Die Schutzhülle 1 umgibt den Transportwagen 20 damit von außen.

Die Schutzhülle 1 umfasst im Wesentlichen eine Schutzplane 2, ein Haltemittel 4 und ein Verbindungsmittel 7.

Die Schutzplane 2 wird vorteilhaft von einem flächigen Zuschnitt gebildet, der vorzugsweise eine rechteckige Geometrie oder im Wesentlichen eine rechteckige Geometrie aufweist. Die rechteckige Geometrie ergibt sich aus den Flächen des Transportwagens 20, die von der Schutzhülle 1 umgeben werden sollen. Durch die vertikale Ausrichtung der Seitenflächen eines Transportwagens 20 ergibt sich ein rechteckiger Zuschnitt. Die Schutzplane 2 weist eine Oberkante 3 auf, die im befestigten Zustand in Richtung einer Oberseite 26 eines Rahmengestells 24 ausgerichtet ist. Ferner weist die Schutzplane 2 eine erste und eine zweite Seitenkante 5 und 6 auf, die an die Oberkante 3 angrenzen. Grundsätzlich kann der Zuschnitt der Schutzplane 2 auch von der Rechtecksform abweichen, z.B. wenn die Seitenflächen des Transportwagens 20 nicht vertikal ausgerichtet sind.

Weiter besteht die Schutzplane 2 vorzugsweise aus einer Gitter-verstärkten Folie oder Gerüstbaufolie, die beide als Standardware verfügbar sind. Besonders bevorzugt wird für die Schutzplane 2 Gitterfolie verwendet, da sie in beide Raumrichtungen der Ebene der Schutzplane 2 verstärkt ist. Alternativ sind aber auch nur in eine Raumrichtung verstärkte Folien denkbar, hierbei werden bevorzugt Verstärkungen in Längsrichtung der Schutzhülle 1 bevorzugt.

Die Schutzplane 2 ist vorzugsweise luftundurchlässig, alternativ können jedoch auch diverse Öffnungen zum kontrollierten Luftaustausch in die Schutzplane 2 eingearbeitet sein. Bevorzugt ist die Schutzplane 2 teilweise lichtdurchlässig ausgeführt. Für bestimmte Anwendungszwecke, z.B. für den Transport von Gütern, die vor UV-Strahlung geschützt werden müssen, sind auch lichtundurchlässige Schutzplanen 2 möglich. Weiterhin wäre es möglich anstatt eines folienartigen Materials auch andere flächige Stoffe als Material für die Schutzplane 2 zu verwenden, dazu zählen z.B. auch Netze, vorzugsweise engmaschige Netze, und Textilien.

Die Länge der Schutzplane 2 ist so gewählt, dass sie im befestigten Zustand sämtliche zu bedeckenden Seitenflächen des Transportwagens 20 bedeckt und zusätzlich die erste Seitenkante 5 die zweite Seitenkante 6 zu einem gewissen Teil überlappt. Die Breite der Schutzplane 2, also die Länge der ersten und zweiten Seitenkante 5 und 6, entspricht der Höhe des Transportwagens 20, vorzugsweise abzüglich der Höhe der Rollen 36. Die Schutzplane 2 - und damit die Schutzhülle 1 - ist bevorzugt so dimensioniert, dass sie für genormte CC-Container verwendet werden kann. Grundsätzlich ist mit einer Anpassung der Größe die Anwendung bei Transportwägen 20 beliebiger Größe möglich.

Im Bereich der Oberkante 3 sind die zwei Haltemittel 4 unverlierbar angebracht. Die Haltemittel 4 sind vorzugsweise als Formschlusselemente, weiter vorzugsweise als Haken ausgeführt. Alternativ sind neben den Haken auch andere Haltemittel 4, z.B. Magnete, denkbar. Die Haltemittel 4 sind über jeweils eine Befestigungsschlaufe 27, die an ihren beiden Enden mit der Schutzplane 2 vernäht ist, unverlierbar mit der Schutzplane 2 verbunden. Die Haltemittel 4 sind so angeordnet, dass sie im befestigten Zustand in eine Aufnahme 25 im Bereich der vertikalen Stangen 21 des Rahmengestells 24 eingreifen können. Weiter sind die Haltemittel 4 so positioniert, dass das in Richtung der Oberkante 3 gerichtete Ende des Haltemittels 4 nicht bis zu der Oberkante 3 reicht; dieser Abstand der obersten Enden der Haltemittel 4 zu der Oberkante 3 ist bei beiden Haltemitteln 4 gleich groß. Die Oberkante 3 kann damit im befestigten Zustand über die Haltemittel 4 hinausragen. Je nach Größe des Transportwagens 20 ist auch eine von zwei abweichende Anzahl der Haltemittel 4 möglich.

An der ersten und zweiten Seitenkante 5 und 6 ist jeweils das Verbindungsmittel 7 unverlierbar angebracht. Für das Verbindungsmittel 7 wird dabei bevorzugt eine Klettverbindung verwendet. Alternativ sind auch andere Verbindungsmittel 7, z.B. ein Reißverschluss, denkbar. Besonders bevorzugt wird eine bandförmige Klettverbindung verwendet, die im Wesentlichen parallel zu der ersten und zweiten Seitenkante 5 und 6 verläuft und sich über die gesamte Länge der ersten und zweiten Seitenkante 5 und 6 erstreckt. Alternativ wäre für die Klettverbindung auch denkbar, dass sie sich nicht über die gesamte Länge der ersten und zweiten Seitenkante 5 und 6 erstreckt bzw. unterbrochen ist. Bei der in Fig. 2 gezeigten Ausführungsform wird das Verbindungsmittel 7 an der ersten Seitenkante 5 durch ein Klettband 15 gebildet, wohingegen das Verbindungsmittel 7 an der zweiten Seitenkante 6 durch ein Flauschband 16 gebildet wird. Sowohl das Klettband 15 als auch das Flauschband 16 sind mit der Schutzplane 2 vorzugsweise vernäht. Das Klettband 15 ist bei dieser Ausführungsform an der Innenfläche 9 angeordnet, das Flauschband 16 ist dagegen an der Außenfläche angeordnet. Alternativ besteht die Möglichkeit einer abweichenden Anordnung, solange das Klettband 15 auf der anderen Innenfläche 9 bzw. Außenfläche als das Flauschband 16 angeordnet ist.

Die in Fig. 2 gezeigte Ausführungsform weist vorteilhaft drei Spannvorrichtungen 10 auf, die mit der ersten und zweiten Seitenkante 5 und 6 verbunden sind. Alternativ kann auch eine andere Anzahl der Spannvorrichtungen 10 gewählt werden. Die Spannvorrichtung 10 wird an der ersten Seitenkante 5 durch einen Spanngurt 11 und ein Einsteckelement 13 eines Klickverschlusses 12 gebildet. Der Spanngurt 11 ist dabei im Wesentlichen parallel zu der Oberkante 3 ausgerichtet und ist mit der Schutzplane 2 über eine erste Naht 17 vernäht. Die erste Naht 17 verbindet nur den von der ersten Seitenkante 5 abgewandten Teil des Spanngurtes 11 mit der Schutzplane 2. In Fig. 2 wird dies durch eine gestrichelte Linie schematisch dargestellt. Die erste Naht 17 endet in einem gewissen Abstand zu der ersten Seitenkante 5, wobei sich der lose Spanngurt 11 bis zu der ersten Seitenkante 5 erstreckt. Das nicht mit der Schutzplane 2 vernähte Ende des Spanngurtes 11 wird durch die zwei Ösen des Einsteckelements 13 gefädelt.

An der zweiten Seitenkante 6 ist der Spanngurt 11 ebenfalls im Wesentlichen parallel zu der Oberkante 3 ausgerichtet, wobei eine zweite Naht 19 zur Verbindung des Spanngurts 11 mit der Schutzplane 2 dient. Die zweite Naht 19 reicht hier bis zu der zweiten Seitenkante 6. Das überstehende Ende des Spanngurtes 11 ist mit einem Aufnahmeelement 14 des Klickverschlusses 12 unlösbar verbunden.

Über den Klickverschluss 12 und die Spanngurte 11 ist das erste Seitenende 5 mit dem zweiten Seitenende 6 formschlüssig lösbar verbindbar. Dafür wird das Einsteckelement 13 in das Aufnahmeelement 14 gesteckt. Bei mehreren Spannvorrichtungen 10 erfolgt eine paarweise Verbindung der Einsteckelemente 13 der ersten Seitenkante 5 mit den Aufnahmeelementen 14 an der zweiten Seitenkante 6. Der durch die Ösen des Einsteckelements 13 geführte Spanngurt 11 kann nun zum Spannen der Schutzhülle 1 genutzt werden, indem an dem Ende des durch die Ösen geführten Spanngurtes 11 gezogen wird. Durch die Umlenkung des Spanngurtes 11 durch die Ösen dienen diese als eine Rückrutschsicherung, so dass der Spannungszustand aufrechterhalten werden kann. Durch eine Kippbewegung des Einsteckelements 13 kann die Rückrutschsicherung gelöst werden. Die formschlüssige Verbindung zwischen dem Einsteckelement 13 und dem Aufnahmeelement 14 kann manuell gelöst werden.

Die Spannvorrichtung 10 ist vorzugsweise im Bereich der ersten und zweiten Seitenkante 5 und 6 an der Innenfläche 9 vorgesehen. Damit wird gewährleistet, dass die Spanngurte 11 beim Transport nicht stören.

Die Schutzplane 2 wird insbesondere im Bereich der Spannvorrichtung 10 belastet, weshalb bei der vorliegenden Ausführungsform in diesem Bereich eine Materialverstärkung 18 vorgesehen ist. Die Materialverstärkung 18 kann beispielsweise aus einem Lochband bestehen. Dabei ist es zweckmäßig, wenn sich die Materialverstärkung 18 von dem Bereich der Befestigung der Spannvorrichtung 10 an der ersten Seitenkante 5 zum Bereich deren Befestigung an der zweiten Seitenkante 6 erstreckt. Die Materialverstärkung 18 ist somit im Wesentlichen parallel zu der Oberkante 3 ausgerichtet. Alternativ wäre es auch möglich, dass die Materialverstärkung 18 zwischen der ersten und der zweiten Seitenkante 5 und 6 unterbrochen ist.

Grundsätzlich kann die Anordnung der Verbindungsmittel 7 und der Spannvorrichtung 10 an der ersten Seitenkante 5 mit der an der zweiten Seitenkante 6 vertauscht werden.

Zur vereinfachten Handhabung ist ein Eingriff 8 im Bereich einer vertikalen Stange 21 des Transportwagens 20 im montierten Zustand angeordnet, wodurch es ermöglicht wird, dass beim Transport des Transportwagens 20 die vertikale Stange 21 des Transportwagens 20 mit einer Hand gegriffen werden kann, was zu einer verbesserten Kontrolle des Transportwagens 21 führt. Der Eingriff 8 ist vorzugsweise in der oberen Hälfte, vorzugsweise im oberen Drittel der Schutzhülle 1 im montierten Zustand angeordnet; besonders vorteilhaft in Brusthöhe eines durchschnittlichen erwachsenen Menschen, was ergonomisch vorteilhaft ist. Alternativ ist es möglich, mehr als einen Eingriff 8 vorzusehen. In diesem Fall sollten die weiteren Eingriffe 8 ebenfalls im Bereich der senkrechten Stangen 21 angeordnet sein.

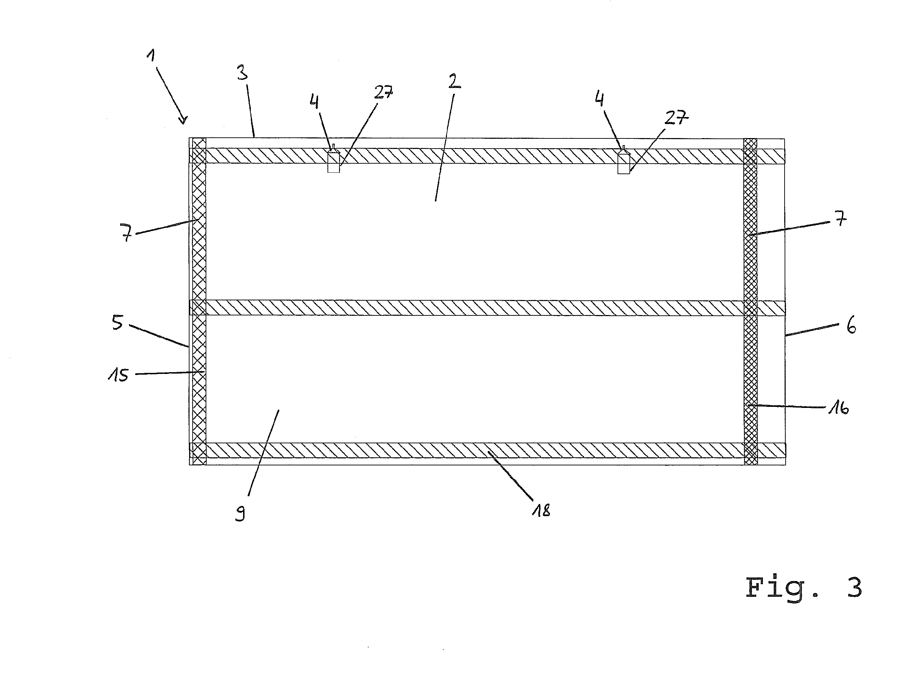

Eine weitere bevorzugte Ausführungsform der Erfindung ist in Fig. 3 abgebildet. Die Schutzhülle 1 besteht hier aus einer Schutzplane 2, einem Haltemittel 4 und einem Verbindungsmittel 7. Die Ausführungsform ist somit bis auf das Fehlen der Spannvorrichtung 10 und der Eingriffe 8 mit der Ausführungsform aus Fig. 2 identisch. Alternativ besteht jedoch die Möglichkeit die Spannvorrichtung 10 oder den Eingriff 8 zusätzlich anzubringen.

## Patentansprüche

1. Schutzhülle (1), die zur Umhüllung eines fahrbaren, ein Rahmengestell (24) und eine Mehrzahl von in dem Rahmengestell (24) gehaltenen Böden (23) aufweisenden Transportwagens (20), insbesondere zum Transport von Pflanzen und Blumen, eingerichtet ist, wobei die Schutzhülle (1) eine flächige Schutzplane (2) umfasst, **dadurch gekennzeichnet, dass**
- im Bereich einer Oberkante (3) der Schutzplane (2) mindestens ein Haltemittel (4) unverlierbar angebracht ist, das mit einer Aufnahme (25) an der Oberseite (26) des Rahmengestells (24) lösbar verbindbar ist, um die Schutzhülle (1) an der Oberseite (26) des Rahmengestells (24) zu halten, und
- im Bereich einer ersten und einer zweiten Seitenkante (5 und 6) der Schutzplane (2) jeweils mindestens ein Verbindungsmittel (7) unverlierbar angebracht ist, wobei
- das Verbindungsmittel (7) im Bereich der ersten Seitenkante (5) mit dem Verbindungsmittel (2) im Bereich der zweiten Seitenkante (6) lösbar verbindbar ist.

2. Schutzhülle (1) nach Anspruch 1, **dadurch gekennzeichnet, dass**
- das Haltemittel (4) durch ein Formschlusselement gebildet wird.

3. Schutzhülle (1) nach einem der vorangehenden Ansprüche,
**dadurch gekennzeichnet, dass**
- das Haltemittel (4) durch ein Hakenelement gebildet wird.

4. Schutzhülle (1) nach einem der vorangehenden Ansprüche,
**dadurch gekennzeichnet, dass** die Schutzplane (2) durch eine luftundurchlässige Folie gebildet wird.

5. Schutzhülle (1) nach einem der vorangehenden Ansprüche,
**dadurch gekennzeichnet, dass**
- die Schutzplane (2) durch eine Gitter-verstärkte Folie oder Gerüstbaufolie gebildet wird.

6. Schutzhülle (1) nach einem der vorangehenden Ansprüche,
**dadurch gekennzeichnet, dass**
- das Verbindungsmittel (7) durch eine Klettverbindung gebildet wird.

7. Schutzhülle (1) nach einem der vorangehenden Ansprüche,
**dadurch gekennzeichnet, dass**
- sich das Verbindungsmittel (7) über den Großteil der Länge der ersten Seitenkante (5) und/oder der zweiten Seitenkante (6) erstreckt.

8. Schutzhülle (1) nach einem der vorangehenden Ansprüche,
**dadurch gekennzeichnet, dass**
- an der Schutzhülle (1) mindestens ein Eingriff (8) vorgesehen ist, durch den eine vertikale Stange (21) des Rahmengestells (24) bei befestigter Schutzhülle (1) greifbar ist.

9. Schutzhülle (1) nach einem der vorangehenden Ansprüche, wobei die Schutzhülle (1) eine Innenfläche (9) und eine Außenfläche aufweist, **dadurch gekennzeichnet, dass**
- das Verbindungsmittel (7) im Bereich der ersten Seitenkante (5) entweder auf der Innenfläche (9) oder auf der Außenfläche vorgesehen ist, und
- das Verbindungsmittel (7) im Bereich der zweiten Seitenkante (6) an der jeweils anderen Außen-/Innenfläche (9) vorgesehen ist.

10. Schutzhülle (1) nach einem der vorangehenden Ansprüche,
**dadurch gekennzeichnet, dass**
- die Länge der flächigen Schutzhülle (1) so gewählt ist, dass bei Verbindung des Verbindungsmittels (7) der ersten Seitenkante (5) mit dem Verbindungsmittel (7) der zweiten Seitenkante (6) eine Überschneidung der ersten und zweiten Seitenkante (5 und 6) gegeben ist.

11. Schutzhülle (1) nach einem der vorangehenden Ansprüche,
**dadurch gekennzeichnet, dass**
- im Endbereich der ersten und zweiten Seitenkante (5 und 6) mindestens eine Spannvorrichtung (10) vorgesehen ist.

12. Schutzhülle (1) nach Anspruch 11, **dadurch gekennzeichnet, dass**
- die Spannvorrichtung (10) mit dem Bereich der ersten Seitenkante (5) und dem Bereich der zweiten Seitenkante (6) verbunden ist.

13. Schutzhülle (1) nach Anspruch 11 oder 12, **dadurch gekennzeichnet, dass**
- die Spannvorrichtung (10) mindestens einen Spanngurt (11) umfasst.

14. Schutzhülle (1) nach einem der Ansprüche 11 bis 13, **dadurch gekennzeichnet, dass** die Spannvorrichtung (10) mindestens einen Klickverschluss (12) umfasst.

15. Schutzhülle (1) nach einem der Ansprüche 11 bis 14, **dadurch gekennzeichnet, dass**
- die Schutzhülle (1) im Bereich der Spannvorrichtung (10) materialverstärkt ist.
